(19) 

**Europäisches Patentamt**

**European Patent Office**

**Office européen des brevets**

(11) **EP 4 745 540 A1**

(12) **EUROPEAN PATENT APPLICATION**

(43) Date of publication:
**20.05.2026 Bulletin 2026/21**

(21) Application number: **24213597.8**

(22) Date of filing: **18.11.2024**

(51) International Patent Classification (IPC):
**G01J 3/02** (2006.01)    **G01J 3/10** (2006.01)
**G01J 3/457** (2006.01)    **G01J 3/453** (2006.01)

(52) Cooperative Patent Classification (CPC):
**G01J 3/457; G01J 3/0218; G01J 3/10;
G01J 3/4531;** G01J 2003/102

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Comind Technologies Limited
London EC1R 5EJ (GB)**

(72) Inventor: **The designation of the inventor has not
yet been filed**

(74) Representative: **Mathys & Squire
32 London Bridge Street
The Shard
London SE1 9SG (GB)**

(54) **SYSTEM AND METHOD**

(57) A system comprising: a first light source; a second light source; a light combining apparatus; and a plurality of optical channels arranged to provide: a first sample path, wherein a first portion of the first sample path is arranged to couple the first light source to an object to be analysed, and wherein a second portion of the first sample path is arranged to couple the object to the light combining apparatus; a first reference path arranged to couple the first light source to the light combining apparatus; a second sample path, wherein a first portion of the second sample path is arranged to couple the second light source to the object, and wherein a second portion of the second sample path is arranged to couple the object to the light combining apparatus; and a second reference path arranged to couple the second light source to the light combining apparatus; wherein the light combining apparatus is configured to: combine sample light from the first light source received via the first sample path with reference light from the first light source received via the first reference path to provide a first plurality of beat frequency components; combine sample light from the second light source received via the second sample path with reference light from the second light source received via the second reference path to provide a second plurality of beat frequency components; and provide a combined optical signal comprising a sum of the first plurality of beat frequency components and the second plurality of beat frequency components; wherein the system is configured to overlap the first plurality of beat frequency components with the second plurality of beat frequency components in the combined optical signal such that distributions of time of flight through the object associated with the first and second plurality of beat frequency components are aligned in the time of flight dimension.

Fig. 1

EP 4 745 540 A1

**Description**

**Field**

The present disclosure relates to systems and methods in the field of spectroscopy, in particular to time resolved spectroscopy systems such as interferometric near-infrared spectroscopy (iNIRS) systems.

**Background**

Spectroscopy methods such as iNIRS, diffuse correlation spectroscopy ('DCS'), time-resolved DCS ('TD-DCS') or time-resolved NIRS ('TD-NIRS') can be used to infer properties of an object by directing light from a light source, such as a laser, towards that object and then using a detector to measure corresponding properties of the light received from that object. The received light may include some of the light which was directed towards the object from the light source, and which subsequently scattered from the object and towards the detector. By monitoring this received light over time, and how the received light signals may change, one or more properties of the object can be inferred. For example, GB2619063 discloses non-invasive intracranial pressure sensing systems and methods which utilise iNIRS for non-invasively determining the intracranial pressure of a subject.

It is desirable to provide improvements to such spectroscopic systems and methods.

**Summary**

Aspects of the disclosure are set out in the independent claims and optional features are set out in the dependent claims. Aspects of the disclosure may be provided in conjunction with each other, and features of one aspect may be applied to other aspects.

In an aspect, there is provided a system comprising: a first light source; a second light source; a light combining apparatus; and a plurality of optical channels arranged to provide: a first sample path, wherein a first portion of the first sample path is arranged to couple the first light source to an object to be analysed, and wherein a second portion of the first sample path is arranged to couple the object to the light combining apparatus; a first reference path arranged to couple the first light source to the light combining apparatus; a second sample path, wherein a first portion of the second sample path is arranged to couple the second light source to the object, and wherein a second portion of the second sample path is arranged to couple the object to the light combining apparatus; and a second reference path arranged to couple the second light source to the light combining apparatus; wherein the light combining apparatus is configured to: combine sample light from the first light source received via the first sample path with reference light from the first light source received via the first reference path to provide a first plurality of beat frequency components; combine sample light from the second light source received via the second sample path with reference light from the second light source received via the second reference path to provide a second plurality of beat frequency components; and provide a combined optical signal comprising a sum of the first plurality of beat frequency components and the second plurality of beat frequency components; wherein the system is configured to overlap and align the first plurality of beat frequency components with the second plurality of beat frequency components in the combined optical signal such that distributions of time of flight through the object associated with the first and second plurality of beat frequency components are aligned in the time of flight dimension.

Embodiments may enable two different beat frequency distributions to effectively be combined into a single combined light signal, i.e. one associated with the first light source and one associated with the second light source. That is, the intensity of received light in each of a plurality of time of flight bins may be formed from both first and second light. One combined beat frequency distribution may then be obtained (from which a time of flight distribution may be obtained), and this distribution may contain information from both light sources (first and second beat frequencies may be indistinguishable from each other in the combined distribution). By overlapping and aligning the first and second beat frequency distributions, the resulting combined beat frequency distribution may still contain meaningful information about the photon times of flight, as both contributing distributions are aligned so that the time of flight bins for the first light source may be the same as the corresponding time of flight bins for the second light source. In turn, the amplitude of the combined distribution may be approximately double that of each individual contributing distribution. This approach may therefore increase the signal to noise ratio for the digitisation of that combined beat frequency distribution, as the signal to be digitised will be at greater amplitudes. Likewise, this may reduce componentry requirements for the digitisation of combined light signals, as a double distribution may be obtained using a single digitisation.

The combined optical signal may comprise an optical signal which contains both the first beat frequency components and the second beat frequency components summed together, e.g. so that the signal intensity/amplitude for each beat frequency component in the combined signal may be based on a sum of the intensity arising due to a first beat frequency component with the intensity arising due to a second beat frequency component. In other words, at beat frequencies where both the first and second light source are contributing, the amplitude of the beat frequency component in the combined signal will be elevated relative to the individual components (e.g. due to both components contributing to that signal amplitude). The beat frequency components within the combined optical signal may therefore be at a greater intensity or magnitude. The system may be configured to digitise the combined optical signal. This digitisation may yield greater signal to noise, as compared to an optical signal arising from a single light source, due to the elevated intensity for each beat frequency component.

Each beat frequency component within the combined optical signal may correspond to an associated time of flight through the object. That is, each beat frequency component within the combined optical signal may represent a corresponding time of flight through the object, and that time of flight may be applicable to light from both light sources (e.g. the same beat frequency component from the first and second light sources may represent the same time of flight). Aligning the first and second plurality of beat frequency components in the time of flight dimension may comprise configuring the optical channels such that a beat frequency component associated with the first light source may represent the same time of flight information as a corresponding beat frequency component associated with the second light source. The time of flight dimension may provide an indication of the time of flight through the object (e.g. based on a difference in time of flight between sample and reference arms). For example, the system may be configured to overlap and align the first plurality (e.g. distribution) of beat frequency components with the second plurality (e.g. distribution) of beat frequency components in the combined optical signal, e.g. so that each beat frequency component within the combined optical signal may correspond to an associated time of flight through the object.

The system being configured to overlap and align the first plurality of beat frequency components with the second plurality of beat frequency components in the combined optical signal such that each beat frequency component within the combined optical signal corresponds to an associated time of flight through the object may comprise arranging the plurality of optical channels accordingly. In the combined optical signal, each beat frequency component may correspond to a respective, associated, time of flight. Both the first plurality of beat frequency components and the second plurality of beat frequency components may contribute to each beat frequency component in the combined optical signal. For at least some of the beat frequency components in the combined optical signal, that component may be contributed to by both a beat frequency component associated with the first light source and a component at the same beat frequency but associated with the second light source. The system is configured so that the two components (i.e. from the two light sources) may represent the same, or substantially similar (e.g. within a threshold amount of time), time of flight through the object. For example, the system may be configured to convert the combined optical signal into a digital form. The system may be configured to obtain time of flight data based on the different beat frequency components within the (digital version of the) combined light signal. The system may be arranged such that the first and second components (i.e. associated with the first and second light sources, respectively) contribute to the same time of flight data, e.g. they can both be attributed to the same time of flight bins. For example, irrespective of whether the beat frequency component in the combined optical signal arises due to light from the first light source, light from the second light source, or light from both light sources, the frequency of that beat frequency component may be indicative of the same time of flight information. The system may determine time of flight information based on the combined optical signal without needing to distinguish first light from second light, e.g. the two distributions of beat frequencies are aligned and overlapped such that they each represent corresponding time of flight information to each other (e.g. a beat frequency in one will represent the same, or sufficiently similar, time of flight information to a beat frequency in the other).

In other words, like frequencies of the first distribution of beat frequencies and the second distribution of beat frequencies may correspond to a same optical sample path length difference. For example, a path length difference between sample and reference arms for the first light source may be the same as a path length difference between sample and reference arms for the second light source. That way, differences in time of flight through the object may be the primary cause for why different beat frequency components are present, and those different beat frequency components will represent the same time of flight difference irrespective of whether they cam from the first or second light source.

The associated time of flight through the object may be based on the beat frequency of the beat frequency component. The frequency value may be indicative of the difference in wavelength between sample and reference light, as combined at the light combining apparatus. For example, for a linear increasing sweep in wavelength of light from the light source, a larger frequency may represent a longer time of flight. The intensity of each beat frequency component may represent how much light had that time of flight (e.g. greater intensity = more light). The system may be configured to determine an indication of a time of flight value based on the frequency value, e.g. there may be stored information for this conversion. For example, within the combined optical signal, there may be one time of flight associated with each beat frequency value (or range of beat frequency values).

The system may further comprise an optical path length adjuster configured to adjust an optical path length of at least one of the optical channels. That is, the optical path length adjuster may be configured to increase and/or decrease the optical path length along which light must travel. For example, the optical path length adjuster may comprise an optical delay line. Each optical channel may provide a designated path for delivering light, such as an optical fibre or through use of free space componentry. The optical path length adjuster may comprise componentry configured to vary the optical path length for this designated path for light. The optical path length adjustment provided by the optical path length adjuster may be selected to overlap and align the first distribution of beat frequencies with the second distribution of beat frequencies. A first difference in optical path length between the first sample path and the first refence path may correspond to, e.g. be the same as, a second difference in optical path length between the second sample path and the second reference path. For example, the system may be arranged so that beat frequencies for the first light may represent the same time of flight distances as corresponding beat frequencies for the second light (i.e. a given beat frequency for first light may represent the same time of flight for the same beat frequency for second light).

The optical path length adjustment may be selected so that the first and second differences are the same. That is, absent the path lengths which individual photons take through the object, the difference between sample arm path length and reference arm path length will be the same for the two light sources. For example, where optical fibres are used, the difference in fibre length between sample and reference arms may be the same. The optical path length adjuster may be provided in one of the optical channels which provides a reference path. At least one of the first and second light sources may be coupled to the light combining apparatus via a reference channel which includes an optical path length adjuster. The optical path length adjuster may comprise a variable optical delay.

At least one of the plurality of optical channels may provide a portion of two or more of said paths (e.g. two or more of: the first sample path, the first reference path, the second sample path and the second reference path). For example, a portion of both the first and second sample paths may be provided by the same optical channel. For example, a portion of both the first and second reference paths may be provided by the same optical channel. In other words, the four defined paths do not need to be provided by their own respective optical channels, e.g. some optical channels may provide multiple paths.

For example, the second portion of the first sample path and the second portion of the second sample path may be provided by a common sample optical channel. That is, there may be an optical channel (the common sample optical channel) arranged to couple the object to the light combining apparatus. The common sample optical channel may be arranged to receive light from the object from the first light source (e.g. thereby to provide the second portion of the first sample path) and light from the object from the second light source (e.g. thereby to provide the second portion of the second sample path). In other words, the common sample optical channel may be configured to receive both first sample light and second sample light (e.g. which are both to be provided to the light combining apparatus). That (single) common sample channel may couple the object to the light combining apparatus.

For example, a portion of the first reference path and a portion of the second reference path may be provided by a common reference optical channel. That is, there may be an optical channel (e.g. the common reference optical channel) arranged to couple to each light source and to the light combining apparatus. For example, the system may comprise a reference light combiner configured to combine first reference light (e.g. light from the first light source delivered to the first reference channel) and second reference light (e.g. light from the second light source delivered to the second reference channel) into the common reference optical channel. The light combining apparatus may be coupled to the common reference channel. For example, the common reference channel may extend from the reference light combiner to the light combining apparatus (e.g. with separate first and second reference channels coupling each respective light source to the reference light combiner).

The light combining apparatus may be coupled to both common optical channels (the common sample optical channel and the common reference optical channel). For example, these may be two inputs to the light combining apparatus. The light combining apparatus may be configured to combine light received from the two common channels. As the common sample optical channel may comprise light from both light sources (e.g. first and second sample light), and the common reference optical channel may comprise light from both light sources (e.g. first and second reference light), the light combining apparatus may be configured to provide a combined beat frequency distribution. For example, the combined beat frequency distribution may be formed from both the first distribution of beat frequencies (associated with light from the first light source), and the second distribution of beat frequencies (associated with light from the second light source). For example, the combined beat frequency distribution may contain a sum of the first distribution and the second distribution. An output of the light combining apparatus may be coupled to a digitiser, e.g. which is configured to convert the combined light signal into a digital representation thereof. In other words, the light combining apparatus may be configured to combine light received from the common reference optical channel with light received from the common sample optical channel.

The system may comprise a spectroscopy system. The system may comprise an interferometric system. Both light sources may be wavelength swept light sources arranged to provide the same wavelength sweep pattern. The system may be an interferometric near-infrared spectroscopy, iNIRS, system arranged to analyse human or animal tissue.

In an aspect, there is provided a method of operating a system comprising: a first light source, a second light source, a light combining apparatus, and a plurality of optical channels arranged to provide: (i) a first sample path, (ii) a first reference path, (iii) a second sample path, and (iv) a second reference path, the method comprising: directing light from the first light source along the first sample path, wherein a first portion of the first sample path couples the first light source to an object to be analysed, and wherein a second portion of the first sample path couples the object to the light combining apparatus; directing light from the first light source along the first reference path, wherein the first reference path couples the first light source to the light combining apparatus; directing light from the second light source along the second sample path, wherein a first portion of the second sample path couples the second light source to the object, and wherein a second portion of the second sample path couples the object to the light combining apparatus; directing light from the second light source along the second reference path, wherein the second reference path couples the second light source to the light combining apparatus; using the light combining apparatus to: combine sample light from the first light source received via the first sample path with reference light from the first light source received via the first reference path to provide a first plurality of beat frequency components; combine sample light from the second light source received via the second sample path with reference light from the second light source received via the second reference path to provide a second plurality of beat frequency components; and overlapping the first plurality of beat frequency components with the second plurality of beat frequency components in the combined optical signal such that distributions of time of flight through the object associated with the first and second plurality of beat frequency components are aligned in the time of flight dimension.

In an aspect, there is provided a method of preparing a system for analysing an object, the system comprising: a first light source; a second light source; a light combining apparatus; and a plurality of optical channels arranged to provide: a first sample path, wherein a first portion of the first sample path is arranged to couple the first light source to an object to be analysed, and wherein a second portion of the first sample path is arranged to couple the object to the light combining apparatus; a first reference path arranged to couple the first light source to the light combining apparatus; a second sample path, wherein a first portion of the second sample path is arranged to couple the second light source to the object, and wherein a second portion of the second sample path is arranged to couple the object to the light combining apparatus; and a second reference path arranged to couple the second light source to the light combining apparatus; wherein the light combining apparatus is configured to: combine sample light from the first light source received via the first sample path with reference light from the first light source received via the first reference path to provide a first plurality of beat frequency components; combine sample light from the second light source received via the second sample path with reference light from the second light source received via the second reference path to provide a second plurality of beat frequency components; and provide a combined optical signal comprising a sum of the first plurality of beat frequency components and the second plurality of beat frequency components; wherein the method comprises adjusting an optical path length of at least one of the optical channels thereby to overlap the first plurality of beat frequency components with the second plurality of beat frequency components in the combined optical signal such that distributions of time of flight through the object associated with the first and second plurality of beat frequency components may be aligned in the time of flight dimension.

The first distribution of beat frequencies and the second distribution of beat frequencies may each comprise a calibration distribution of beat frequencies (e.g. a distribution obtained for calibration purposes). For example, the method may comprise an iterative process. The method may comprise obtaining a first beat frequency distribution for first light and obtaining a beat frequency distribution for second light. The method may comprise utilising a known calibrator for obtaining these distributions, e.g. this may comprise a known reflector. An optical path length adjuster may be operated to adjust an optical path length of at least one optical channel of the system. First and second beat frequency distributions may then be subsequently obtained (using the altered optical path length adjustment). This process may be iterated until the two distributions are aligned with each other, e.g. so that the obtained beat frequency distribution for the first light source (for this calibration) is the same as, or within a threshold displacement from, the obtained beat frequency distribution for the second light source. In other words, the optical path length for at least one optical channel of the system may be adjusted until the beat frequency distributions obtained from the two light sources are representative of the same time of flight information to each other.

Aspects of the present disclosure may comprise one or more computer program products comprising program instructions configured to control a system to perform any of the methods disclosed herein.

**Brief description of the drawings**

Embodiments of the disclosure will now be described, by way of example only, with reference to the accompanying drawings, in which:

Fig. 1 is a schematic diagram of an example spectroscopy system;
Fig. 2 is a schematic diagram of the spectroscopy system of Fig. 1 in more detail;
Fig. 3 is a graph illustrating time of flight distributions;
Fig. 4 is a series of graphs illustrating mismatched beat frequencies and associated temporal point spread functions; and
Fig. 5 is a series of graphs illustrating matched beat frequencies and associated temporal point spread functions.

**Detailed description of the drawings**

Embodiments of the present disclosure relate to spectroscopy systems and methods in which light from two (or more) different coherent light sources is used to analyse a sample based on an interferometric combination of light from each light source which has passed through the sample with reference light from that light source. For each light source, the interferometric combination of sample light with reference light will generate a plurality of beat frequencies. In particular, there will be a distribution of different beat frequencies, which correspond to differences in time of flight for photons of light travelling through the object to be analysed. For embodiments of the present disclosure, the system is arranged to sum beat frequencies from a first light source with beat frequencies from a second light source. Optical channels of the system are arranged so that a combined light signal which contains both beat frequencies (i.e. from the first and second light sources) will have two distributions (for the first and second beat frequencies, respectively) aligned in the time of flight dimension so that they sum together to provide a combined distribution with a larger amplitude at each beat frequency (with beat frequencies from each light source at the same frequency contributing to the same time of flight bin in the combined distribution). For this, one or more optical channels of the system, such as reference channels, may include an optical path length adjuster (e.g., delay) to facilitate alignment and overlapping of the two beat frequency distributions at the combiner. This may enable greater measurement sensitivity, as well as reducing the requirements on processing and conversion circuitry. In some instances, it may be advantageous if the first and/or the second light sources can be activated or deactivated for temporal multiplexing.

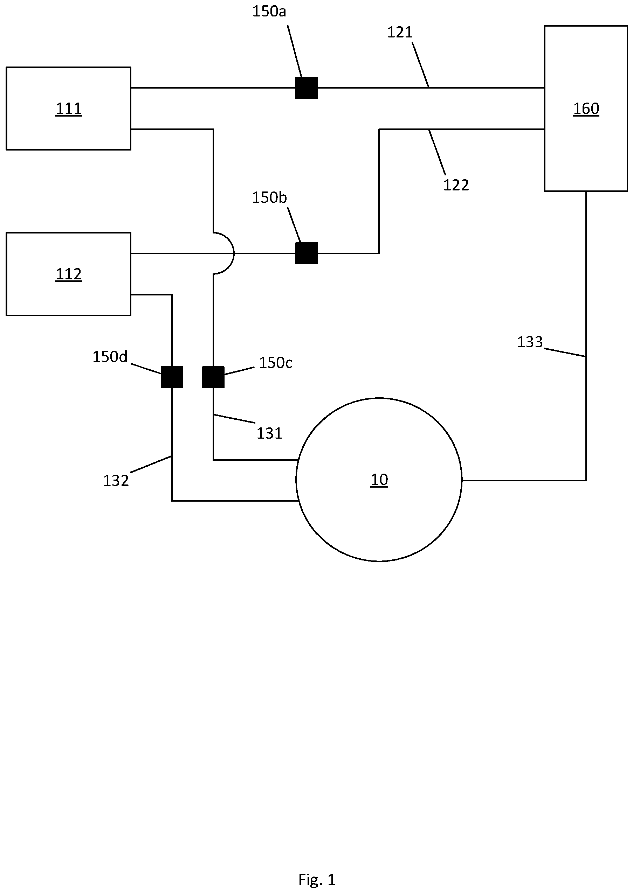

One example of a spectroscopy system will now be described with reference to Fig. 1.

Fig. 1 shows a spectroscopy system 100. The spectroscopy system 100 includes a first light source 111, a second light source 112, a first reference path 121, a second reference path 122, a first sample delivery path 131, a second sample delivery path 132, a sample output path 133, and a light combining apparatus 160. A path length adjuster is included in the system 100 of Fig. 1. Four possible location options for this path length adjuster are shown in Fig. 1: 150a, 150b, 150c, 150d (any or all of these adjusters may be included). The spectroscopy system 100 is shown coupled to a sample 10 for its analysis.

The first light source 111 is coupled to the first reference path 121 and the first sample path 131. The first light source 111 is coupled to the light combining apparatus 160 via the first reference path 121. The first light source 111 is couplable to the sample 10 via the first sample path 131.

The second light source 112 is coupled to the second reference path 122 and the second sample path 132. The second light source 112 is coupled to the light combining apparatus 160 via the second reference path 122. The second light source 112 is couplable to the sample 10 via the second sample path 132.

The sample output path 133 is couplable to the sample 10. The sample output path 133 is coupled to the light combining apparatus 160. In other words, the sample output path 133 couples the sample 10 to the light combining apparatus 160.

The light combining apparatus 160 is coupled to the first light source 111 (via the first reference path 121), the second light source 112 (via the second reference path 122) and the sample 10 (via the sample output path 133). The light combining apparatus 160 may comprise a light combiner, for example in the form of a beam splitter cube.

As shown in Fig. 1, the path length adjuster may be coupled to at least one of: (i) the first reference path 121 (shown as adjuster 150a), (ii) the second reference path 122 (shown as adjuster 150b), (iii) the first sample path 131 (shown as adjuster 150c), and (iv) the second sample path 132 (shown as adjuster 150d). That is, the path length adjuster may be located between at least one of the light sources 111, 112 and the light combining apparatus 160 (e.g., on either the path taken by reference light therefrom and/or the path taken by sample light therefrom).

The first light source 111 is configured to provide wavelength swept emission of coherent light. That is, the first light source 111 is configured to output light having a wavelength which varies over time according to a selected wavelength profile. Light from the first light source 111 is divided into sample light (e.g., light which is to be delivered to the sample 10) and reference light (e.g., light which is to be delivered along the reference path to the combining apparatus 160). The system is configured to deliver the sample light to the sample 10 along the first sample delivery path 131. The system is configured to deliver the reference light to the light combining apparatus 160 along the first reference path 121. For example, the first light source 111 may be coupled to a light splitter configured to split light received from the first light source 111 onto each of the first sample delivery path 131 (as sample light) and the first reference path 121 (as reference light).

The second light source 112 is configured to provide wavelength swept emission of coherent light. That is, the second light source 112 is configured to output light having a wavelength which varies over time according to a selected wavelength profile. Light from the second light source 112 is divided into sample light and reference light. The system is configured to deliver the sample light to the sample 10 along the second sample delivery path 132. The system is configured to deliver the reference light to the light combining apparatus 160 along the second reference path 122. For example, the second light source 112 may be coupled to a light splitter configured to split light received from the first light source 112 onto each of the second sample delivery path 132 (as sample light) and the second reference path 122 (as reference light).

As mentioned above, each of the first and second light sources 111, 112 are configured to provide wavelength-swept emission of coherent light in which the wavelength will vary over time according to a selected wavelength profile. For example, the wavelength profile may comprise a sweep pattern stipulating how the wavelength changes over time. The first and second light sources 111, 112 may be configured to emit light following the same wavelength profile (i.e. the same sweep pattern). That is, both light sources may be configured to sweep through different wavelengths at the same rate and in the same direction (e.g., increasing/decreasing) during each wavelength sweep. The two light sources may be centred on the same wavelength, or they may be centred on different wavelengths. In accordance with various embodiments, the two light sources may generate the same wavelengths at the same time. In either case, the absolute change in wavelength during the sweep will be the same for the two light sources. For example, the range of wavelengths swept by the first light source 111 may be the same as the range of wavelengths swept by the second light source 112. An instantaneous sweep rate of the first light source 111 may be the same as an instantaneous sweep rate of the second light source 112. In other words, the rate of increase (or decrease) of the first wavelength swept signal may be the same as the rate of increase (or decrease) of the second wavelength swept signal as the two signals vary according to their common sweep pattern.

The first reference path 121 is configured to direct reference light received from the first light source 111 to the light combining apparatus 160. Similarly, the second reference path 122 is configured to direct the reference light received from the second light source 112 to the light combining apparatus 160. The first sample path 131 is configured to direct sample light received from the first light source 111 to the sample 10. The second sample path 132 is configured to direct sample light received from the second light source 112 to the sample 10. From hereon in, light delivered from the first and second light sources 111, 112 to the sample 10 (via sample delivery paths 131, 132) will be referred to as 'first sample light' and 'second sample light' respectively, and light delivered from the first and second light sources 111, 112 to the light combining apparatus 160 (via reference paths 121, 122) will be referred to as 'first reference light' and 'second reference light' respectively.

The sample output path 133 is configured to direct light received from the sample 10 to the light combining apparatus 160. The sample output path 133 will receive a sample output signal comprising some first sample light and some second sample light, wherein at least some of each of the first and second sample light received in the sample output path 133 will have travelled through at least a portion of the sample 10.

In other words, the light combining apparatus 160 is configured to receive: (i) first and second reference light (via reference paths 121 and 122, respectively), and (ii) a sample output signal comprising first and second sample light (via delivery paths 131, 132, respectively, and then output path 133).

The light combining apparatus 160 is configured to combine sample output signals (containing first and second sample light) with the first and second reference light signals to provide a combined light signal. The combined light signal will comprise both: (i) a plurality of first components corresponding to a first distribution of beat frequencies associated with coherent interference of the first reference light with the first sample light, and (ii) a plurality of second components corresponding to a second distribution of beat frequencies associated with coherent interference of the second reference light and the second sample light. Each individual beat frequency may be a difference frequency associated with a difference in the optical delay between reference light and a the sample light which were combined by light combining apparatus 160, e.g., where that difference arises due to the wavelength sweeping of the light source and a difference in optical path length between the sample and reference arms, and different path lengths of photons through the sample 10.

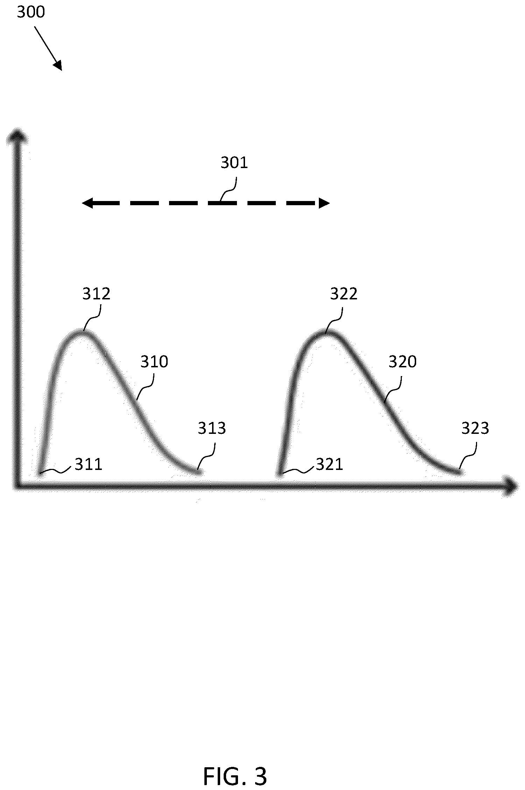

As will be appreciated in the context of the present disclosure (and as described below in more detail in relation to Fig. 3), an obtained beat frequency distribution for either light source relates intensity to beat frequency. A higher intensity will correspond to a greater number of incident photons. A greater difference between the optical path travelled by the reference signal and the optical path travelled by the sample signal will correspond to a greater beat frequency when the signals are combined. It will be appreciated that the optical path travelled by the sample signal includes the sample arms (e.g., the path between the light source and the sample) and the path through the sample itself. Therefore, in an example, a higher beat frequency will correspond to a greater (if the reference path is shorter than the associated sample path) or smaller (if the reference path is longer than the associated sample path) difference in optical path length between sample and reference arms. The distribution will typically have a sharp rise in intensity once above a lowest registered beat frequency. This rise will continue before gradually reaching a peak intensity and then tailing off relatively slowly. As such, each obtained distribution may have: (i) a lowest registered beat frequency (i.e. the lowest beat frequency at which a non-zero intensity, or at least a statistically significant intensity, is registered), (ii) a maximum intensity beat frequency (i.e. the beat frequency which has the highest intensity), and (iii) a highest registered beat frequency (i.e. the highest beat frequency at which a non-zero intensity is registered).

Each beat frequency distribution may provide an indication of a time of flight distribution ('DTOF') for sample light photons. As will be appreciated in the context of the present disclosure, each individual DTOF will be unique and individual depending on the behaviour of its constituent photons. This behaviour is to a certain extent random and unpredictable, such that two distributions (e.g. from two different light sources) will most likely never be perfectly identical. However, these two distributions may contain a number of commonalities, such as highest and lowest frequencies, general shape, and/or average values. For example, where a sawtooth sweep is used for the light source, photons which take a longer time to travel through the sample 10 (e.g., due to penetrating deeper within the sample and/or undergoing more scattering events) will be at a wavelength which is further away from the wavelength of the reference light with which they will be combined. Analysis of the sample 10 may be performed based on monitoring obtained DTOFs and/or the evolution of such obtained DTOFs.

As mentioned above, the combined light signal obtained by the light combining apparatus 160 may contain first and second beat frequency distributions, i.e. a distribution of beat frequencies associated with light from the first light source 111 and a distribution of beat frequencies associated with light from the second light source 112.

The present inventors have identified that by manipulating the system 100 to align and overlap the resulting first and second beat frequency distributions within the combined light signals, measurement sensitivity and efficiency can be increased. That is, the combined light signal, as generated by the light combining apparatus 160, will contain a single, combined, distribution of beat frequencies. This combined distribution of beat frequencies will correspond to a sum of the first and second beat frequency distributions. By aligning and overlapping the beat frequencies, the resulting combined distribution will itself still provide meaningful time of flight information. In other words, each beat frequency in the combined distribution will itself be representative of a given time of flight, irrespective of whether that beat frequency arose from the first or the second light source. In this way, the distributions of time of flight through the object associated with the beat frequencies from the first light source and the beat frequencies from the second light source may be aligned in the time-of-flight dimension.

In particular, the coherent light generated by the first light source will interfere minimally with the coherent light generated by the second light source, and so the first sample light will only interfere with the first reference light (despite second sample and reference light also being present), and likewise for the second reference light. As a result, the first and second beat frequency distributions will in effect be created independently of each other (due to the lack of interference between light from the two light sources). However, the resulting beat frequency distributions, as contained within the combined light signal, may be added together when the same sweep pattern is used in the first light source 111 and the second light source 112. As such, by aligning and overlapping the first and second beat frequency distributions within the combined light signal, the resulting combined signal may contain a distribution at approximately double the magnitude, but which still encodes information about the sample 10. As will be appreciated, each individual beat frequency distribution will have an inherent degree of variability due to the different photon paths through the sample, but overall, the two distributions may have sufficient similarities that their combination amounts to an approximate doubling of the intensity at each beat frequency. This may reduce the requirements on circuitry for converting this combined light signal into digital data (as compared to converting two separate distributions). Also, this may increase measurement sensitivity due to the greater amplitude within the combined light signal to be converted.

For each individual light source, the fact that a number of different beat frequencies are generated results from the variable optical paths taken through the sample 10 by individual photons of light. That is, some photons will take a relatively short journey through the sample 10 and others may take a much longer journey. The beat frequencies (or 'difference frequencies') will be at frequencies corresponding to the difference in wavelength between sample and reference light. As a result, the distribution of different beat frequencies will correspond to the distribution of different flight times through the sample 10, as this is the main portion of the optical path (either sample or reference) into which ambiguity or randomness is introduced (i.e. due to the random movement through the sample 10). Through the optical channels (e.g. optical fibres), there will be much less variability in the times of flight for light travelling along those channels. The present inventors have identified that, by controlling these optical channels accordingly, beat frequencies for the first light source can be made to represent the same time of flight information as the same beat frequencies for the second light source.

In particular, the system 100 may be arranged so that the difference in optical channel path length between sample and reference arms for both light sources is the same. The optical channel path length comprising the path along which light will travel, but which excludes the travelling of light through the sample 10. That is, for the first light source 111, the optical channel path length for sample light is formed (e.g. consists) of the first sample delivery path 131 and the sample output path 133, and for the second light source 112, the optical channel path length for sample light is formed (e.g. consists) of the second sample delivery path 132 and the sample output path 133. For both light sources, the optical channel path length for reference light is formed (e.g. consists) of the respective reference channel 121, 122.

In other words, the system 100 may be configured so that the difference in time of flight between the sample optical channels and reference optical channel(s) for the first light source is the same as that for the second light source. For instance, the optical path length difference for the first light source (i.e. optical path length of 131 + 133 - 121) will be the same as that for the second light source (i.e. optical path length of 132 + 133 - 122). As a result, for both light sources, absent any travel through the sample, the difference between sample and reference arms would be the same. In so doing, the resulting variability in beat frequencies for both light sources will be representative of the passage through the sample 10, with the absolute beat frequencies for light from either light source representing the same time of flight difference from travel through the sample 10.

To further facilitate alignment of the first and second beat frequency distributions, the system 100 may comprise optical path length adjuster. The path length adjuster may comprise a variable optical path length, such as an optical delay line. This may comprise free-space componentry, such as a movable mirror, or fibre componentry. Each of the optical paths may be provided by an optical fibre. The path length adjuster may comprise an adjustable length of optical path for an optical fibre. The path length adjuster may comprise a component coupled to an optical channel which forms part of the sample or reference arm for one of the light sources. In other words, the path length adjuster may be coupled to one of the portions of optical channel whose length is controlled to align and overlap the beat frequency distributions. For instance, as already mentioned, the system 100 may be designed so that the optical path lengths are related as per:

$$Length\ of\ (131 + 133 - 121) = Length\ of\ (132 + 133 - 122)$$

The path length adjuster may be coupled to one of these portions of optical path (e.g. to at least one of the first/second sample deliver paths 131, 132, the sample output path 133, and/or the first/second reference paths 121,122). The system may comprise a plurality of optical path length adjusters coupled to two or more of these portions. For example, at least one of sample or reference light from one or both light sources may pass through an optical path length adjuster on its journey from light source to light combining apparatus 160. For example, both reference channels 121, 122 may be coupled to such an optical path length adjuster.

The optical path length adjuster may be configured to adjust an optical path length of at least one of the first reference light, the first sample light, the second reference light and the second sample light. For example, the optical path length adjuster may be configured to adjust an optical path length of one or both of the reference paths 121, 122, e.g., to adjust an optical path length difference between the first and second reference light, as received at the light combining apparatus 160 (and likewise for the first and second sample delivery paths 131, 132). In other words, the optical path length adjuster may be arranged to vary the timing at which reference light from at least one of the light sources 111, 112 and/or sample light from at least one of the light sources 111, 112 will be received at the light combining apparatus 160. For example, the optical path length adjuster may be configured to selectively introduce a controlled and variable delay to reference light travelling along one or both of the reference paths 121, 122 and/or to sample light travelling along a sample optical channel (i.e. first/second delivery paths 131, 132).

The system 100 may be configured to control operation of the path length adjuster to align and overlap the first and second beat frequency distributions. That is, the system 100 may be configured with the path length adjuster providing a selected optical path length adjustment (e.g., delay), so that the first and second beat frequency distributions are aligned with each other and overlapping in the combined light signal. Where the adjuster is coupled to a reference arm, this may comprise adjusting the effective reference channel length (e.g. length of reference path 121 or 122) to align and overlap the beat frequency distributions. Where the adjuster is coupled to a sample arm, this may comprise adjusting the effective sample channel length (e.g. length of sample delivery path 131 or 132) to align and overlap the beat frequency distributions.

The path length adjuster may be configured to provide a variable optical path to whichever channel it is coupled. To adjust the optical path length, the path length adjuster may comprise an adjustable length of optical fibre or an adjustable free space component such that the optical path length of the channel to which it is coupled may be increased and/or decreased.

Aligning and overlapping the first and second beat frequency distributions in the combined light signal may comprise adjusting the optical path length of at least one optical channel (e.g., using the path length adjuster). Aligning and overlapping may comprise adjusting the optical path length such that one or more reference points in the two beat frequency distributions are at the same value. For example, this may comprise identifying one or more characteristic beat frequencies, such as a lowest beat frequency having an intensity above a floor level, a highest beat frequency having an intensity above a floor level and/or a modal beat frequency in the distribution. Additionally, or alternatively, this may comprise performing an initial calibration with a known reflector, e.g. which provides less inherent randomness to the movement of photons, and so for which distributions from the two light sources could expect to be suitably similar that they could be overlapped based on distribution shape (as well as other characteristic frequencies for the distribution).

Although not shown in Fig. 1, the system 100 may comprise a photodetector coupled to the light combining apparatus 160. The photodetector may be configured to convert the combined light signal into one or more electrical signals for digital conversion of the combined light signal (e.g., to obtain digital data indicative of the combined light signal). The system 100 may comprise circuitry (not shown) configured to analyse the combined light signal, for example by analysing the combined distribution of beat frequencies. The circuitry may be configured to control or instruct relevant adjustment of the optical path length adjuster to align and overlap the two beat frequency distributions.

As such, the system 100 is configured to align and overlap the first and second beat frequency distributions so that the first and second beat frequencies add together in the combined light signal to provide a combined beat frequency distribution (e.g., which is indicative of the sum of the first and second beat frequency distributions). The system 100 may be configured to process and/or digitally convert the combined light signal, e.g., to obtain digital data of the combined beat frequency distribution (e.g., indicative of a combined DTOF). The system 100 may be configured to perform analysis of the sample 10 based on such combined data.

By processing and converting just the one beat frequency distribution (the combined distribution), fewer photodetectors and/or processing/conversion circuitry may be needed. Also, as the amplitude of the signal to be processed and converted may be larger (i.e. due to the summed beat frequencies), the resulting measurement may have greater sensitivity. The first and second light source may be coupled to the sample 10 within a threshold distance of each other. As such, the first and second beat frequency distributions may be approximately indicative of the same volume within the sample, and so the combined distribution may also be indicative of this same volume.

In operation, the first light source 111 generates a first wavelength swept signal of coherent light and the second light source 112 generates a second wavelength swept signal of coherent light. A first reference signal is directed from the first light source 111 along the first reference path 121 and a first sample signal is directed from the first light source 111 along the first sample path 131. A second reference signal is directed from the second light source 112 along the second reference path 122 and a second sample signal is directed from the second light source 112 along the second sample path 132. The first sample signal and the second sample signal are directed to the sample 10 via the first and second sample delivery paths 131, 132, respectively. The light delivered to the sample 10 will scatter and some of this scattered light will be received in the output path 133 in the form of one or more output signals. The one or more output signals will comprise components based on the first sample signal and the second sample signal. The sample output signals and the first and second reference signals arrive at the light combining apparatus 160 and are combined into a combined light signal.

The first reference signal will interfere with the components of the one or more sample output signals that originated from the first light source 111 to provide a first distribution of beat frequencies. The second reference signal will interfere with the components of the one or more sample output signals that originated from the second light source 112 to provide a second distribution of beat frequencies. In other words, the reference signals will interfere with components of the one or more sample output signals with which they are coherent. Analysis of the sample 10 may be performed based on the resulting beat frequency distributions and their evolution over time.

As already mentioned, the difference between sample and reference optical channel lengths for the first and second light source 111, 112 are the same so as to align and overlap the first and second beat frequency distributions. To facilitate this alignment, at least one path length adjuster may have been utilised. The combined light signal will contain the first and second beat frequency distributions, with the first distribution overlapped and aligned with the second distribution to provide a combined distribution corresponding to the sum of the two distributions. This combined light signal (with combined beat frequency distribution) may be converted into digital data for analysis of the sample 10.

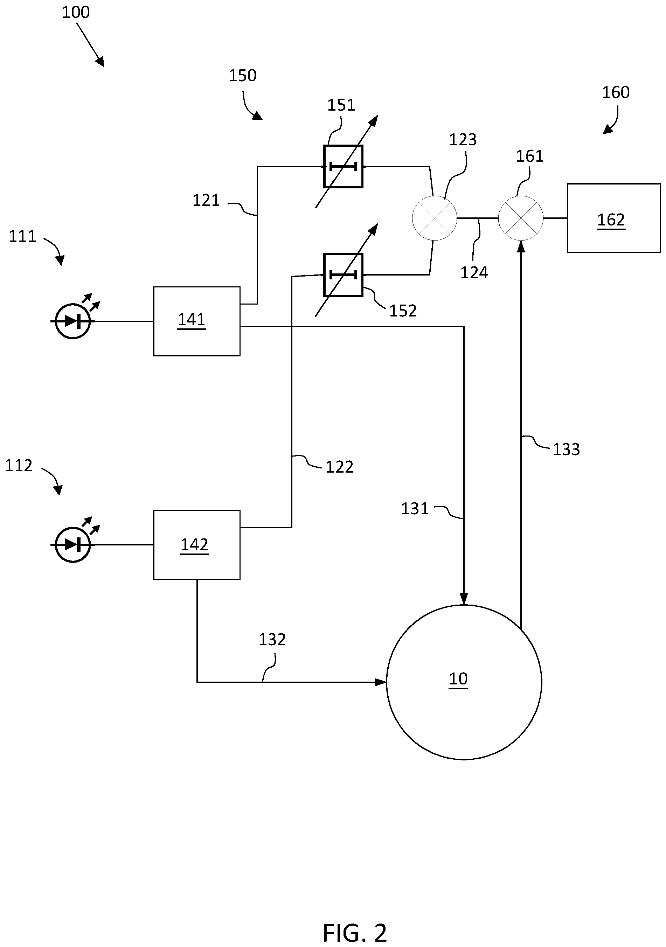

Another example spectroscopy system 100 will now be described with reference to Fig. 2.

The spectroscopy system 100 of Fig. 2 is similar to that of Fig. 1, and so components of the system 100 which have previously been described with reference to Fig. 1 will not be described again.

In addition to the features shown in Fig. 1, the spectroscopy system 100 of Fig. 2 includes a first beam splitter 141 and a second beam splitter 142. Two path length adjusters are shown, in the form of a first path adjuster 151 and a second path adjuster 152. The system also includes a reference beam combiner 123 and a common reference path 124. The light combining apparatus 160 comprises a beam combiner 161 and a detector 162.

The first beam splitter 141 is coupled to the first light source 111. The first beam splitter 141 is coupled to the first reference path 121 and the first sample path 131. The first beam splitter 141 is configured to receive light from the first light source 111. The first beam splitter 141 is configured to split light from the first light source 111 between the first reference path 121 (first reference light) and the first sample path 131 (first sample light).

The second beam splitter 142 is coupled to the second light source 112. The second beam splitter 142 is coupled to the second reference path 122 and the second sample path 132. The second beam splitter 142 is configured to receive light from the second light source 112. The second beam splitter 142 is configured to split light from the second light source 112 between the second reference path 122 (second reference light) and the second sample path 132 (second sample light).

The first path adjuster 151 is arranged in the first reference path 121. The first path adjuster 151 may be located somewhere between the first beam splitter 141 and the reference beam combiner 123. The first path adjuster 151 is configured to adjust the optical path length of the first reference path 121, e.g., so as to adjust the optical path length travelled by the first reference signal.

The second path adjuster 152 is arranged in the second reference path 122. The second path adjuster 152 may be located somewhere between the second beam splitter 142 and the reference beam combiner 123. The second path adjuster 152 is configured to adjust the optical path length of the second reference path 122, e.g., so as to adjust the optical path length travelled by the second reference signal.

The reference beam combiner 123 is coupled to the first reference path 121 and the second reference path 122. The reference beam combiner 123 is coupled to the common reference path 124. In other words, the reference beam combiner 123 may have two inputs (one for each reference path 121, 122) and one output (for the common reference path 124). The common reference path 124 is coupled to the beam combiner 161.

The reference beam combiner 123 is configured to receive the first reference signal from the first reference path 121 and the second reference signal from the second reference path 122. At least one of these reference signals may have been path length adjusted by the path length adjusters 151, 152. The reference beam combiner 123 is configured to combine the first reference signal and the second reference signal into a combined reference signal. The reference beam combiner 123 is configured to direct the combined reference signal to the light combining apparatus 160 along the common reference path 124. This arrangement may enable the beam combiner 161 to take only two inputs: a reference input and a sample input.

The beam combiner 161 is coupled to the reference beam combiner 123 via the common reference path 124. The beam combiner 161 is coupled to the sample output path 133. The beam combiner 161 is coupled to the detector 162. The beam combiner 161 is configured to be coupled to the sample 10, for example via the sample output path 133. The beam combiner 161 is configured to receive the combined reference signal from the reference beam combiner 123. The beam combiner 161 is configured to receive the one or more sample output signals from the sample 10. The beam combiner 161 is configured to combine the combined reference signal with the one or more sample output signals into a combined light signal. The beam combiner 161 is configured to direct the combined light signal to the detector 162.

The detector 162 is coupled to the beam combiner 161. The detector 162 is configured to receive the combined light signal from the beam combiner 161. The detector 162 may comprise a photodetector configured to convert the combined light signal into one or more electrical signals. The system 100 may be configured to generate at least one output signal relating to at least one property of the sample based on the one or more electrical signals from the detector 162.

The operation of the system 100 in Fig. 2 is similar to that described in relation to Fig. 1. In the example shown in Fig. 2, the first beam splitter 141 splits the first wavelength swept signal into a first reference signal directed along the first reference path 121 and a first sample signal directed along the first sample path 131. Likewise, the second beam splitter 142 splits the second wavelength swept signal into a second reference signal directed along the second reference path 122 and a second sample signal directed along the second sample path 132. The first path adjuster 151 provides a selected optical path adjustment to the first reference signal in the first reference path 121 and the second path adjuster 152 provides a selected optical path adjustment to the second reference signal in the second reference path 122. The reference beam combiner 123 combines the adjusted reference signals into a combined reference signal. The combined reference signal is directed to the light combining apparatus 160 via the common reference path 124. The beam combiner 161 combines the combined reference signal from the common reference path 124 with the one or more sample output signals from the sample output path 133, to provide the combined light signal. Other features of the operation of the system 100 illustrated in Fig. 2 may be the same or similar to the features described in relation to Fig. 1.

Fig. 3 is a graph 300 showing a time of flight distribution (DTOF). The graph 300 may represent a DTOF for a combined light signal from the light combining apparatus 160, for example the combined light signal detected by the detector 162. The graph 300 shown in Fig. 3 illustrates the DTOFs before the two distributions are overlapped and aligned (e.g., before any adjustment of one or both of the optical path lengths for the reference paths 121, 122). It will be appreciated in the context of the present disclosure that the terms beat frequency distribution and DTOF may be used to refer to corresponding distributions, as the DTOF may be inferred based on the values in the beat frequency distributions (and so the two distributions will look the same, just with different axes labels).

The graph 300 illustrates a first distribution 310 and a second distribution 320. The first distribution 310 represents the distribution of beat frequencies associated with the first reference signal and the first sample signal while the second distribution 320 represents the distribution of beat frequencies associated with the second reference signal and the second sample signal. The first distribution 310 and the second distribution 320 are generally Poisson-like, having a relatively steep increasing gradient portion until reaching a maximum, before decreasing at a shallower rate.

The first distribution 310 and the second distribution 320 each have characteristic features. For example, the first distribution 310 has a first low-frequency point 311, a first peak intensity (or modal frequency) point 312 and a first high-frequency point 313. The second distribution 320 has a second low-frequency point 321, a second peak intensity (or modal frequency) point 322 and a second high-frequency point 323. They also have a similar general shape. It will be appreciated that the DTOF is proportional to the beat frequency, as a longer TOF of the photons of a sample signal through the sample leads to a longer delay with respect to the corresponding reference signal, resulting in a greater deviation of the sample signal wavelength compared to the reference signal wavelength at a given time. A greater deviation in wavelength results in a higher beat frequency generated when the reference signal is interfered with the sample signal.

As shown in Fig. 3, the second distribution 320 has a delay 301 with respect to the first distribution 310. The delay 301 may be due to the difference between sample and reference optical channels being greater for the second light, as compared to the first light. To facilitate the subsequent overlapping and aligning of the distributions of beat frequencies, one or more optical path length adjusters may be used to adjust an optical path length of one or more of the optical channels (e.g. so that the difference between sample and reference optical channels is the same for the two light sources). For example, the first path adjuster 151 may be set to introduce a delay into the first reference signal, resulting in the first distribution 310 aligning with the second distribution 320. The first distribution 310 and the second distribution 320 are illustrated qualitatively, i.e., the two distributions 310, 320 are generally not identical but may be similar.

The system 100 may be arranged to align one or more characteristic features of the first reference signal with corresponding characteristic feature(s) of the second reference signal. For example, the system 100 may be arranged to align the first peak intensity point 312 to correspond to a same beat frequency as the beat frequency of the second peak intensity point 322. In this way, the first distribution 310 and the second distribution 320 may be aligned in time/beat frequency.

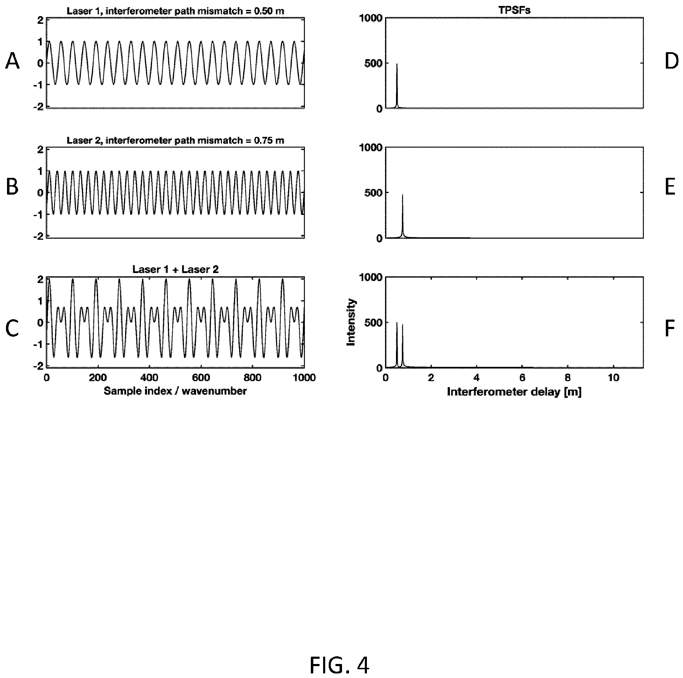

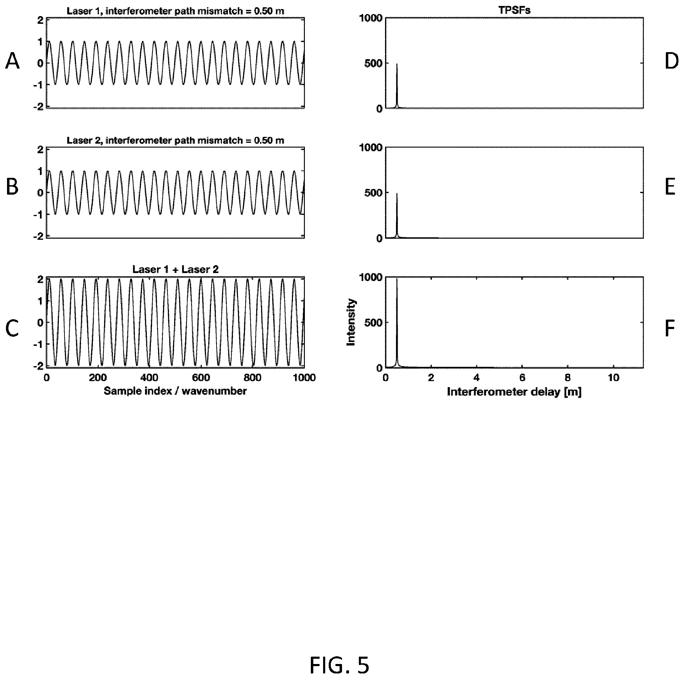

Fig. 4 and Fig. 5 each show a series of graphs A-F. In each figure, graph A illustrates a light signal from a first light source (e.g. the first light source 111) and graph B illustrates a light signal from a second light source (e.g. the second light source 112). Graph C illustrates the superposition of the light signals in graphs A and B. Graphs D-F illustrate temporal point spread functions (TPSFs) of the signals shown in graphs A-C, respectively. It will be appreciated that DTOF data can be derived from the TPSF.

In Fig.4, the light signals illustrated in graphs A and B have different mismatches (e.g., 0.5 m and 0.75 m, respectively) resulting in different frequencies. As such, the combined light signal comprises beat frequencies, as shown in graph C. Therefore, the TPSF of the combined signal (as shown in graph F) has two separate peaks whose intensities are equal to the respective TPSF peak of the of the individual light signals (i.e. graphs D and E).

In contrast, the light signals illustrated in graphs A and B of Fig. 5 have the same mismatches (e.g. both being 0.5 m) resulting in the same frequencies. As such, the combined light signal does not comprise beat frequencies, but rather comprises a signal for which each point is the sum of the amplitudes of each constituent signal. Therefore, the TPSF of the combined signal (as shown in graph F) has a single peak whose intensity is the sum of the respective TPSF peaks of the of the individual light signals (i.e. graphs D and E). In the illustrated example in which the signals graph A and graph B are identical, it will be appreciated that the TPSF of the combined signal will have an amplitude that is double the amplitude of the first (or second) signal.

The system 100 may be arranged to monitor the amplitude of the DTOF, which may be derived from the TPSF. The system may be arranged to adjust the optical path length difference based on a monitored amplitude of the DTOF. As explained above, when the first distribution 310 and the second distribution 320 are aligned in time / beat frequency and overlapped, the amplitude of the combined DTOF may be increased. This may not amount to a perfect doubling of the DTOF amplitude, but it is likely that, for most time of flight bins, the intensity will increase.

As mentioned above, methods of the present disclosure may include combining one or more sample output signals with the first reference signal and the second reference signal into a combined light signal comprising a first distribution 310 of beat frequencies associated with the first reference signal and the first sample signal, and a second distribution 320 of beat frequencies associated with the second reference signal and the second sample signal. Methods of the present disclosure may further include adjusting at least one optical channel path length to synchronise the first distribution 310 and the second distribution 320 in time. For example, this may be performed by reducing the offset (e.g., delay 301) between the first distribution 310 and the second distribution 320, such as by selecting an appropriate adjustment with the path length adjuster.

As described above, the present disclosure provides a spectroscopy system configured to provide analysis of an object to be analysed (e.g., sample 10). For this, the system may be configured to obtain time of flight data through the sample, where that data may correspond to the sum of two or more overlapped and aligned beat frequency distributions. While this functionality may be broadly applicable in a large number of technical fields, one particular application of interest is for non-invasive analysis of human or animal bodies, and in particular for analysis of brain tissue.

In view of this, embodiments of the present disclosure may comprise a spectroscopy system configured to provide non-invasive analysis of a human or animal body. The spectroscopy system may comprise a mount for mounting to a surface of a human or animal body. In particular, the spectroscopy system may comprise a head mount configured to mount to the head of a human or animal head, such as the head of a human, e.g., a human adult. The head mount may be configured to couple to the head to enable the system to analyse brain tissue within the head. For example, the head mount may be configured to couple to at least a portion of the surface of the head for directing light towards the subject's scalp and into their brain tissue.

The system may be configured to determine an intracranial pressure measurement for the wearer's brain. For example, the system may be configured to follow one of the approaches set out in GB2619063 to determine ICP.

Although not shown in the figures, the system may comprise a controller configured to control operation of the system to implement any of the methods disclosed herein. For example, the controller may be configured to determine an indication of one or more properties of the sample (e.g., of brain tissue) based on data obtained from a combined beat frequency distribution.

While the system has been described as directing the first sample signal and the second sample signal to the sample independently, this arrangement should not be considered limiting. For example, the first and second light sources may be coupled to the sample via a common sample delivery path (e.g., which will receive both the first sample signal and the second sample signal). For example, the system may comprise a combiner configured to combine sample light from both sources into a combined sample input signal, and the combined sample input signal may be directed into the sample (e.g., along the common sample delivery path). Likewise, while the arrangements shown have included a single output path coupling the sample to the light combining apparatus, it will be appreciated that multiple paths may be used, with the paths ultimately all directing their received light to the light combining apparatus. In the latter case, an optical path length adjuster could be provided in one of the sample output channels (e.g. if that was only to be combined with light from one of the light sources).

While the system has been described as including two light sources, the disclosure also extends to arrangements including more than two light sources. It will be appreciated that the arrangements described herein can be adapted for multiple light sources, for example by including a reference path and a sample path for each additional light source, and by combining all of the reference signals and the sample signals together, instead of only combining the signals from the first light source and the second light source. It will also be appreciated that the path length adjuster may be configured to align and/or overlap all of the resulting distributions of reference signals and/or beat frequencies.

In examples described herein, the sample arm is described as being longer than the reference arm, e.g., so that sample light travelling for longer through the sample will have a greater difference frequency as compared to the reference light. However, it is to be appreciated that this need not be the case. For example, in such scenarios, the difference frequency may be lower for longer sample path lengths (e.g., due to the reference arm being longer than the sample arm). It will be appreciated that the present disclosure may apply to any use of the difference frequencies in the first and second distributions being aligned. Similarly, it will be appreciated that the particular choice of wavelength for the two light sources need not be the same, as long as the wavelength-sweep is the same, e.g., so that both wavelengths change by the same absolute value over the same time period. The two light sources may provide exactly the same wavelength emission (e.g., sweeping centred around the same wavelength) or they may use the same absolute sweeping but centred around a different wavelength.

In the examples described herein, the two beat frequency distributions are aligned and overlapped with each other. In so doing, the resulting distribution will be a sum distribution corresponding to a sum of both first and second distributions. It is to be appreciated in this context that aligning and overlapping may not require a perfect overlap, e.g., there may be some (relatively small) offset between the two distributions, while still enabling beneficial effects to be provided due to this summed distribution. For example, changes in the evolution of the combined distribution over time may still be apparent with a minor offset in the two distributions. The summed distribution may still result in time of flight bins for first light being applicable to time of flight bins for second light.

As mentioned above, the optical path length adjuster may be coupled to any suitable optical channel of the system to enable the path length difference between sample and reference optical channels for first and second light sources to be adjusted accordingly. In Fig. 2, the path length adjusters are only shown in reference channels, but this need not be the case. The spectroscopy system may be arranged to set the first sample signal and the second sample signal to arrive at the sample at the same time. Likewise, the system may be arranged to set the first reference signal and the second reference signal to arrive at the same time. For example, all four light signals may be synchronised.

In the examples described herein, reference has generally been made to optical path length and how differences in optical path length may give rise to differences in the resulting beat frequencies. However, it will be appreciated in the context of the present disclosure, that, strictly speaking, the relevant parameter is the time it takes for light to travel. To avoid confusion with using "time of flight" for variable travel through the sample, reference has instead been made to "path length", but it will be appreciated that this use of path length should apply to variations in travel time. For example, as will be appreciated, light may travel at different speeds through different media (e.g. due to differences in refractive indices). As such, it may be that two identical path lengths may take different amounts of time for light to travel along them. For the present disclosure, the system is arranged so that the beat frequencies are overlapped and aligned, and this relates to the differences in time between sample light and reference light (i.e. with this time difference corresponding to a difference in the sweep value for the light source).

It will be appreciated from the discussion above that the examples shown in the figures are merely exemplary, and include features which may be generalised, removed or replaced as described herein and as set out in the claims. With reference to the drawings in general, it will be appreciated that schematic functional block diagrams are used to indicate functionality of systems and apparatus described herein. In addition, the processing functionality may also be provided by devices which are supported by an electronic device. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some examples the function of one or more elements shown in the drawings may be integrated into a single functional unit.

As will be appreciated by the skilled reader in the context of the present disclosure, each of the examples described herein may be implemented in a variety of different ways. Any feature of any aspects of the disclosure may be combined with any of the other aspects of the disclosure. For example method aspects may be combined with apparatus aspects, and features described with reference to the operation of particular elements of apparatus may be provided in methods which do not use those particular types of apparatus. In addition, each of the features of each of the examples is intended to be separable from the features which it is described in combination with, unless it is expressly stated that some other feature is essential to its operation. Each of these separable features may of course be combined with any of the other features of the examples in which it is described, or with any of the other features or combination of features of any of the other examples described herein. Furthermore, equivalents and modifications not described above may also be employed without departing from the invention.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any controller described herein may be provided by any control apparatus such as a general purpose processor configured with a computer program product configured to program the processor to operate according to any one of the methods described herein. In addition, the functionality of the controller may be provided by an application specific integrated circuit, ASIC, or by a field programmable gate array, FPGA, or by a configuration of logic gates, or by any other control apparatus.

Other examples and variations of the disclosure will be apparent to the skilled addressee in the context of the present disclosure.

**Claims**

1. A system comprising:

   a first light source;
   a second light source;
   a light combining apparatus; and
   a plurality of optical channels arranged to provide:

   a first sample path, wherein a first portion of the first sample path is arranged to couple the first light source to an object to be analysed, and wherein a second portion of the first sample path is arranged to couple the object to the light combining apparatus;
   a first reference path arranged to couple the first light source to the light combining apparatus;
   a second sample path, wherein a first portion of the second sample path is arranged to couple the second light source to the object, and wherein a second portion of the second sample path is arranged to couple the object to the light combining apparatus; and
   a second reference path arranged to couple the second light source to the light combining apparatus;

   wherein the light combining apparatus is configured to:

   combine sample light from the first light source received via the first sample path with reference light from the first light source received via the first reference path to provide a first plurality of beat frequency components;
   combine sample light from the second light source received via the second sample path with reference light from the second light source received via the second reference path to provide a second plurality of beat frequency components; and
   provide a combined optical signal comprising a sum of the first plurality of beat frequency components and the second plurality of beat frequency components;

   wherein the system is configured to overlap the first plurality of beat frequency components with the second plurality of beat frequency components in the combined optical signal such that distributions of time of flight through the object associated with the first and second plurality of beat frequency components are aligned in the time of flight dimension.

2. The system of claim 1, further comprising an optical path length adjuster configured to adjust an optical path length of at least one of the optical channels.

3. The system of claim 2, wherein the optical path length adjustment provided by the optical path length adjuster is selected to overlap and align the first plurality of beat frequency components with the second plurality of beat frequency components.

4. The system of any preceding claim, wherein a first difference in optical path length between the first sample path and the first refence path corresponds to a second difference in optical path length between the second sample path and the second reference path.

5. The system of claim 4, as dependent on claims 2 or 3, wherein the optical path length adjustment is selected so that the first and second differences are the same.

6. The system of claim 2, or any claim dependent thereon, wherein the optical path length adjuster is provided in one of the optical channels which provides a reference path and/or wherein the optical path length adjuster comprises a variable optical delay.

7. The system of any preceding claim, wherein the second portion of the first sample path and the second portion of the second sample path are provided by a common sample optical channel.

8. The system of any preceding claim, wherein a portion of the first reference path and a portion of the second reference path are provided by a common reference optical channel.

9. The system of claim 8, as dependent upon claim 7, wherein the light combining apparatus is configured to combine light received from the common reference optical channel with light received from the common sample optical channel.

10. The system of any preceding claim, wherein both light sources are wavelength swept light sources arranged to provide the same wavelength sweep pattern.

11. The system of any preceding claim, wherein the system is an interferometric near-infrared spectroscopy, iNIRS, system arranged to analyse human or animal tissue.

12. The system of any preceding claim, wherein at least one of the first and the second light sources is configured to be activated and/or deactivated to provide temporal multiplexing.

13. A method of operating a system comprising: a first light source, a second light source, a light combining apparatus, and a plurality of optical channels arranged to provide: (i) a first sample path, (ii) a first reference path, (iii) a second sample path, and (iv) a second reference path, the method comprising:

   directing light from the first light source along the first sample path, wherein a first portion of the first sample path couples the first light source to an object to be analysed, and wherein a second portion of the first sample path couples the object to the light combining apparatus;
   directing light from the first light source along the first reference path, wherein the first reference path couples the first light source to the light combining apparatus;
   directing light from the second light source along the second sample path, wherein a first portion of the second sample path couples the second light source to the object, and wherein a second portion of the second sample path couples the object to the light combining apparatus;
   directing light from the second light source along the second reference path, wherein the second reference path couples the second light source to the light combining apparatus;
   using the light combining apparatus to:

      combine sample light from the first light source received via the first sample path with reference light from the first light source received via the first reference path to provide a first plurality of beat frequency components;
      combine sample light from the second light source received via the second sample path with reference light from the second light source received via the second reference path to provide a second plurality of beat frequency components; and

overlapping the first plurality of beat frequency components with the second plurality of beat frequency components in the combined optical signal such that distributions of time of flight through the object associated with the first and second plurality of beat frequency components are aligned in the time of flight dimension.

14. A method of preparing a system for analysing an object, the system comprising:

a first light source;
a second light source;
a light combining apparatus; and
a plurality of optical channels arranged to provide:

a first sample path, wherein a first portion of the first sample path is arranged to couple the first light source to an object to be analysed, and wherein a second portion of the first sample path is arranged to couple the object to the light combining apparatus;
a first reference path arranged to couple the first light source to the light combining apparatus;
a second sample path, wherein a first portion of the second sample path is arranged to couple the second light source to the object, and wherein a second portion of the second sample path is arranged to couple the object to the light combining apparatus; and
a second reference path arranged to couple the second light source to the light combining apparatus;

wherein the light combining apparatus is configured to:

combine sample light from the first light source received via the first sample path with reference light from the first light source received via the first reference path to provide a first plurality of beat frequency components;
combine sample light from the second light source received via the second sample path with reference light from the second light source received via the second reference path to provide a second plurality of beat frequency components; and
provide a combined optical signal comprising a sum of the first plurality of beat frequency components and the second plurality of beat frequency components;

wherein the method comprises adjusting an optical path length of at least one of the optical channels thereby to overlap the first plurality of beat frequency components with the second plurality of beat frequency components in the combined optical signal such that distributions of time of flight through the object associated with the first and second plurality of beat frequency components are aligned in the time of flight dimension.

15. A computer program product comprising program instructions configured to control a system to perform the method of claims 13 or 14.

Fig. 1

FIG. 2

FIG. 3

FIG. 4

FIG. 5

Europäisches
Patentamt
European
Patent Office
Office européen
des brevets

# EUROPEAN SEARCH REPORT

Application Number

**EP 24 21 3597**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 621 991 A (COMIND TECH LIMITED [GB]) 6 March 2024 (2024-03-06) * figure 3b * * p. 22, l. 3-6; p. 22, l. 16-24; p. 22, l. 32-33; p. 26, l. 10-11 * ----- | 1-15 | INV. G01J3/02 G01J3/10 G01J3/457 G01J3/453 |

TECHNICAL FIELDS
SEARCHED (IPC)

G01J

The present search report has been drawn up for all claims

| Place of search | Date of completion of the search | Examiner |
|---|---|---|
| Munich | 14 March 2025 | Parise, Berengere |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 3597

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| GB 2621991 | A | 06-03-2024 | GB | 2621991 A | 06-03-2024 |
| | | | WO | 2024042338 A1 | 29-02-2024 |

For more details about this annex : see Official Journal of the European Patent Office, No. 12/82

**REFERENCES CITED IN THE DESCRIPTION**

**Patent documents cited in the description**

- GB 2619063 A